# EUROPÄISCHE PATENTSCHRIFT

(11) **EP 0 768 335 B1**
(45) Veröffentlichungstag und Bekanntmachung des Hinweises auf die Patenterteilung: **11.08.2004**
(21) Anmeldenummer: 96116240.1
(22) Anmeldetag: 10.10.1996
(51) Int. Cl.: C08J 9/00, B29C 44/56

(54) **Offenzelliger thermoplastischer Schaumstoff**
Open-cell thermoplastic foam
Mousse thermoplastiques à cellules ouvertes

(30) Priorität: 13.10.1995 DE 19538160
(43) Veröffentlichungstag der Anmeldung: 16.04.1997
(73) Patentinhaber: Ticona GmbH, 65451 Kelsterbach (DE); MITSUI PETROCHEMICAL INDUSTRIES, LTD., Tokyo 100 (JP)
(72) Erfinder: Van Der Hoeven, Jos, 6097 CW Heel (NL); Vonken, Hub A. G., 6006 CW Weert (NL)
(74) Vertreter: Hoffmann, Peter

(56) Entgegenhaltungen:
- EP-A- 0 642 907
- US-A- 3 694 385
- DATABASE WPI Section Ch, Week 9420 Derwent Publications Ltd., London, GB; Class A17, AN 94-164054 XP002074929 & JP 06 107 837 A (SEKISUI PLASTICS CO LTD)

## Beschreibung

Die Erfindung betrifft ein Formgebilde aus einem thermoplastischen Kunststoffschaum, der zumindest 10 Vol.% offene Zellen enthält, die eine polyederähnliche Gestalt besitzen und aneinander angrenzen, wobei Stege der in einer Raummatrix angeordneten polyederähnlichen Zellen gestaltsmäßig unversehrt sind und zumindest zwei Wände jeder offenen Zelle Öffnungen aufweisen, unter Beibehaltung der mechanischen Festigkeit der Raummatrix, ein Verfahren zur Herstellung eines Formgebildes sowie die Verwendung des Formgebildes.

Ein derartiges Formgebilde ist aus der EP-A 0 642 907 bekannt.

Bei dem Formgebilde handelt es sich um eine offenzellige Kunststoffschaumfolie, die, im Gegensatz zu einer Kunststoffschaumfolie mit geschlossenen Zellen, in der Lage ist, in ihrem Inneren Flüssigkeiten aufzunehmen.

Kunststoffschaumfolien sind schon seit langem bekannt, insbesondere haben Polystyrolschaumfolien ein breites Anwendungsspektrum gefunden. Sie werden beispielsweise als Verpackungsschalen, im Bausektor vor allem als Isoliermaterial, beispielsweise als Untertapeten, verwendet.

Kunststoffschaumfolien werden im allgemeinen in der Weise hergestellt, daß ein thermoplastischer Kunststoff zusammen mit einem Treibmittel, insbesondere einem Treibgas, aus einer ring- oder breitschlitzförmigen oder Koextrusions-Düse extrudiert wird. Kurz nach dem Verlassen der Extrusionsdüse expandiert das im Kunststoff fein verteilte Treibmittel, so daß sich im Kunststoffschaumkörper feinste Bläschen bilden. Je nach Verfahrensbedingungen hinsichtlich der Temperatur und der Extrusionsgeschwindigkeit werden mehr oder weniger große Bläschen erhalten. Dementsprechend enthält die so hergestellte Kunststoffschaumfolie dicht gepackte, geschlossene, gasgefüllte Zellen, wobei das in den Zellen eingeschlossene Gas im allgemeinen Luft und/oder Reste des Treibmittels sind. Die ausgezeichneten Isoliereigenschaften der Kunststoffschaumfolien beruhen im wesentlichen auf den dicht gepackten, geschlossenen, gasgefüllten Zellen, die gewissermaßen eine "immobile" Gas-, insbesondere Luft-Schicht bilden. Eine solche feststehende Luftschicht besitzt eine geringe Wärmeleitfähigkeit.

Völlig anders verhält sich eine Kunststoffschaumfolie, in der die Zellen nicht geschlossen, sondern geöffnet, d.h. durchgängig, sind. Eine solche Kunststoffschaumfolie kann beispielsweise Flüssigkeiten speichern, ähnlich wie ein Schwamm. Bei solchen offenzelligen Schaumstoffen stehen die Zellen untereinander über die Gasphase in Verbindung. Sie bestehen im Extremfall nur noch aus Zellstegen.

In dem Dokument WO 90/14159 ist ein Ölaufsaugmaterial beschrieben, das aus zerkleinertem Polyethylenschaum besteht, ein Hinweis darauf, wie eine intakte saugfähige Kunststoffschaumfolie zu erhalten ist, kann diesem Dokument nicht entnommen werden. Durch Ausübung von mechanischem Druck auf die Kunststoffschaumfolie kann ein Großteil der zuvor geschlossenen Zellen des Polyethylenschaums geöffnet werden. Dabei werden jedoch die mechanische Festigkeit und die Stabilität der Kunststoffschaumfolie deutlich herabgesetzt, da die Zellenwände zum Teil durch den mechanischen Druck deformiert werden. Eine solche Folie kann einen Anteil an geöffneten Zellen von mehr als 50 % besitzen.

Aus der EP-A - 0 090 507 ist eine schalenförmige Verpackung für "Fast Food" bekannt, die aus einer offenzelligen geschäumten Polymerschicht und einer geschlossenzelligen polymeren Außenschicht als Flüssigkeitsbarriereschicht besteht. Als Polymer für beide Schichten findet beispielsweise Polystyrol Verwendung. Die Ausbildung der offenzelligen Kunststoffschaumfolie erfolgt dabei in der gleichen Weise wie die Extrusion der geschlossenzelligen Außenschicht, mit der einen Ausnahme, daß ein Überschuß an Nukleierungsmittel, wie beispielsweise Natriumbicarbonat und Citronsäure, in einem Gewichtsverhältnis von 0,8 bis 1,2 und 1,2 bis 0,8 zugesetzt, jedoch auf den Einsatz eines Treibmittels verzichtet wird. Da kein Treibmittel verwendet wird, ist nur eine einzige Mischkammer und eine einzelne Extrusionsschnecke erforderlich. Bei diesem bekannten Verfahren wird eine offenzellige Polystyrolschaumschicht mit einem mittleren Anteil an offenen Zellen von 50 bis 90 Vol.% erhalten. Bei diesem bekannten Verfahren wird jedoch keine Zellenstruktur erhalten, bei der die einzelnen Zellen untereinander in Verbindung stehen, vielmehr gilt, daß nur die Zellen in der Oberfläche der Kunststoffschaumfolie mit den darunter liegenden, benachbarten Zellen in Verbindung stehen, wobei jedoch keine Zellenstruktur erhalten wird, bei der die Zellen unmittelbar aneinander angrenzen und nur durch die Zellenwände voneinander getrennt sind.

Aus der JP-Patentschrift 3-57348 ist ein feuchtigkeitsabsorbierendes Verpakkungsmaterial aus einem Formkörper bekannt, der aus einer homogenen Mischung von 50 bis 85 Gew.% Ethylenpolymer und 15 bis 50 Gew.% eines Adsorbens besteht, das bei Wasseraufnahme nicht anschwellt.

In der JP-Patentschrift 54-31026 ist ein Verfahren zur Herstellung eines Polypropylenschaumes mit offenzelliger Struktur beschrieben, bei dem Homopolymere oder Copolymere des Propylens unter Druck und Hitze geliert werden, unter Zusatz von Fluorchlor- kohlenwasserstoffen als Treib- bzw. Aufschäummittel und eines herkömmlichen Nukleierungsmittels. Der extrudierte Polypropylenschaum hat eine gleichförmige und feine Zellenstruktur mit einem mittleren Zellendurchmesser von 0,5 mm und eine Dichte von etwa 0,028 g/cm³. Das Absorptionsvermögen des Polypropylenschaumes für Wasser beträgt das 3- bis 7,6-fache der Schaumdichte.

Aufgabe der Erfindung ist es, ein Formgebilde aus einem Kunststoffschaum hoher Reinheit, außerordentlich geringer Wasserabsorption, überragender Sperrwirkung gegen Wasserdampf, sehr guter Hydrolysebeständigkeit und sehr guter elektrischer Isoliereigenschaften, mit einer offenzelligen Zellenstruktur, die in weiten Bereichen variierbar ist, zur Verfügung zu stellen, wobei die Zellen miteinander in Verbindung stehen und die im Inneren des Formgebildes liegenden Zellen ohne mechanische Zerstörung von Zellenwänden für Medien durchgängig sind.

Diese Aufgabe wird erfindungsgemäß durch ein Formgebilde der eingangs beschriebenen Art in der Weise gelöst, daß die Ausgangsstoffe des Kunststoffschaums ein Fremd-Polymer und ein Basispolymer, Nukleierungs- und Treibmittel sind und das Basispolymer aus der Gruppe der Homo- und Copolymere von polycyclischen Olefinen ausgewählt wird.

Die Homo- und Copolymere der polycyclischen Olefine, weiterhin als COC abgekürzt, sind amorphe transparente Copolymere auf der Basis von Cycloolefinen und Ethylen.

In Weiterbildung der Erfindung ist zumindest ein Teilbereich einer der geschlossenen glatten Oberflächen des Formgebildes geöffnet, so daß die an die Oberfläche angrenzenden Zellen und die im Inneren der Raummatrix befindlichen Zellen für Flüssigkeiten zugänglich sind.

In Ausgestaltung der Erfindung enthält der Kunststoffsschaum thermoplastische Cycloolefinhomopolymere und/oder cycloolefincopolymere, Blends von Cycloolefincopolmyeren oder Blends von Cycloolefincopolymeren und nicht thermoplastischen Polymeren.

Die Ausgangsstoffe des Kunststoffschaums sind zumindest ein Polymer und ein Treibgas und/oder ein Nukleierungsmittel. Das Nukleierungsmittel kann auch als Treibgas und umgekehrt das Treibgas als Nukleierungsmittel dienen. Es sind zumindest ein Polymer und Treibgas erforderlich, wozu bei Bedarf das Nukleierungsmittel als ein Zellenstruktur-Regler hinzukommt. Insbesondere handelt es sich bei dem Basispolymer um ein Cycloolefincopolymer, bei dem Nukleierungsmittel um Talkum, Kreide, Natriumcarbonat, Natriumbicarbonat und/oder Zitronensäure, mit bis zu 3 Gew.%, und bei dem Treibmittel um Butan, Propan, CO₂ oder Mischungen hiervon mit bis zu 5 Gew.%. Die Gewichtsanteile der einzelnen Bestandteile hängen im einzelnen von dem verwendeten Extrudertyp ab.

Die weitere Ausgestaltung des Formgebildes ergibt sich aus den Merkmalen der Ansprüche 5 bis 12.

Durch Verändern der Gewichtsanteile der Ausgangsstoffe der Kunststoffschaumfolie kann der Anteil der offenzelligen Struktur in weiten Bereichen variiert werden. Durch die Nachbehandlung wird eine Folie an der nachbehandelten Seite weniger offenzellig als an der unbehandelten Seite. Mit der Erfindung wird der Vorteil erzielt, daß die Kunststoff-Hartschaumfolie, selbst wenn der Anteil an offenzelliger Struktur mindestens 50 Vol.% beträgt, sich in ihren mechanischen Eigenschaften, wie Reißfestigkeit, E-Modul gegenüber den gleichen Eigenschaften einer gleichartigen Kunststoffschaumfolie mit überwiegend geschlossenzelliger Struktur so gut wie nicht unterscheidet. Dies ist darauf zurückzuführen, daß die Zellen der Kunststoffschaumfolie zwar geöffnet sind, jedoch das eigentliche Zellengerüst erhalten bleibt und weder mechanisch noch thermisch verformt bzw. zerstört ist.

Unter dem Begriff "Zellen" sind die in der Kunststoffschaumfolie enthaltenen Hohlräume zu verstehen. Geschlossen sind diese Zellen dann, wenn die den Hohlraum umschließenden Zellenwände aus nicht-perforiertem oder in sonstiger Weise für ein Medium undurchlässigem Kunststoff bestehen. Von offenen Zellen ist dann die Rede, wenn mindestens zwei der den Hohlraum umschließenden Zellenwände Öffnungen aufweisen, so daß zwischen benachbarten Zellen ein Stoffaustausch, insbesondere ein Austausch von flüssigen Medien, möglich ist.

Die Anzahl der geschlossenen bzw. offenen Zellen kann gemäß genormter Verfahren zum Bestimmen des Volumenanteils offener und geschlossener Zellen in harten Schaumstoffen festgestellt werden (z.B gemäß DIN-Norm 4590). Die Angabe von Vol.% für offene Zellen bezieht sich dann jeweils auf das gesamte Volumen einer repräsentativen Volumeneinheit.

Im Rahmen der Aufgabe soll auch ein Verfahren zur Herstellung von Formgebilden aus einem Kunststoffschaum zur Verfügung gestellt werden, das gegenüber dem herkömmlichen Extrusionsverfahren für Kunststoffschaumfolien mit geschlossener Zellenstruktur nur geringfügige Modifikationen der Verfahrensschritte aufweist. Dies wird in der Weise gelöst, daß eine Polymermischung aus einem Fremd-Polymer und zumindest einem Cycloolefincopolymer und Nukleierungsmittel in einem ersten Extrusionsschritt bei einer Temperatur bis zu 320 °C aufgeschmolzen wird, daß ein Treibmittel unter hohem Druck von bis zu 350 bar am Ende des ersten Extrusionsschrittes in die Polymerschmelze injiziert und mit dieser homogen vermischt wird, daß in einem zweiten Extrusionsschritt die Polymerschmelze auf eine Massetemperatur im Bereich der Untergrenze des pseudoplastischen viskosen Temperaturbereiches, z.B. von 120 °C bis 260 °C, unmittelbar vor der Extrusion abgekühlt wird, wobei durch Zusatz von Fremd-Polymer die Massetemperatur bis auf die Temperatur abgesenkt wird, die bei der Extrusion von geschlossenzelligen Kunststoffschäumen aus Cycloolefincopolymeren benötigt wird.

In weiterer Ausführung des Verfahrens wird zumindest eine der Oberflächen des extrudierten Formgebildes durch mechanisches Bearbeiten, wie Abschaben, Ritzen oder Perforieren, oder durch Abkühlen und gleichzeitiges Dehnen beim Austritt aus der Extrusionsdüse, teilweise geöffnet.

Die weitere verfahrensmäßige Ausgestaltung der Erfindung ergibt sich aus den Verfahrensmaßnahmen der Ansprüche 15 bis 23.

Das so hergestellte Formgebilde findet Verwendung als Verpackungsmaterial, insbesondere für Pharmazeutika, als Saugfilter, als elektrisches Isoliermaterial, wobei diese Aufzählung der Verwendungsmöglichkeiten keineswegs vollständig, sondern nur beispielhaft ist.

In Abhängigkeit von dem Temperaturgradienten senkrecht zur Folienoberfläche bei der Extrusion der Kunststoffschaumfolien befinden sich die offenen Zellen mehr oder weniger weit im Inneren der Schaumfolie, wobei die eine Oberfläche ohne weitere Bearbeitung schon eine offenzellige Struktur aufweist, während die andere Oberfläche geschlossen ist. Eine Nachbehandlung zum Erzielen der Offenzelligkeit einer der Oberflächen der Folie entfällt daher.

Die Erfindung wird im folgenden anhand der Zeichnungen näher erläutert. Es zeigen:
- Fig. 1a: in schematischer Schnittansicht eine bekannte Kunststoffschaumfolie mit offener Zellenstruktur, bei der die Zellen durch mechanischen Druck geöffnet werden,
- Fig. 1b: in schematischer Schnittansicht eine Kunststoffschaumfolie mit offener Zellenstruktur nach der Erfindung,
- Fig. 2 eine: perspektivische Ansicht einer Tandem-Extrusionsanlage zur Herstellung von offenzelligen Kunststoffschaumfolien nach der Erfindung,
- Fig. 3a und 3b: schematisch die Anordnung von Fremd-Polymerpartikeln in der Zellenstruktur bzw. in einer Zellenwand einer Kunststoffschaumfolie, und
- Fig. 4a-f: schematische Schnittdarstellungen im vergrößerten Detail von Zellenstrukturen von Kunststoffschaumfolien und deren Flüssigkeitsabsorptionsverhalten.

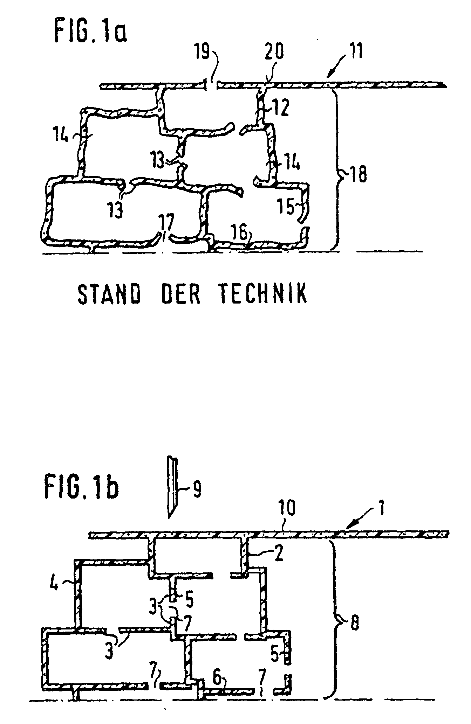

In Figur 1a ist ein schematischer Schnitt durch ein Formgebilde 11 dargestellt, das durch Extrusion einer Kunststoffschmelze nach dem Stand der Technik und nachfolgender mechanischer Druckbelastung der extrudierten Kunststoffschaumfolie erhalten wird. Beim Verschäumen eines Thermoplastes, wie Polystyrol, entsteht bei den bisher bekannten Verfahren eine Folie mit einer geschlossenen Zellenstruktur. Polystyrol kann über den Extrusionsprozeß zu verschiedenen Schaumprodukten mit geschlossener Zellenstruktur verarbeitet werden. Hierbei werden unterschiedliche Treibmittel und Nukleierungsmittel eingesetzt, um erwünschte Produkteigenschaften zu erzielen. Die Zellengröße, Dichte und Struktur des Kunststoffschaums sowie der Erhalt der Offenzelligkeit sind mit physikalischen Variablen und Additiven nach Bedarf zu variieren. Der zu erstellende Kunststoffschaum mit geschlossener Zellenstruktur findet seine Anwendung in unterschiedlichen Gebieten, wobei von spezifischen Eigenschaften, wie geringer Dichte, Isoliervermögen, Verformungsfähigkeit, Gebrauch gemacht wird. Durch die mechanische Druckbelastung einer Oberfläche 20 des Formgebildes 11 werden die zunächst geschlossenen Zellen 12, die unmittelbar an die Oberfläche 20 angrenzen, sowie die darunterliegenden Zellen 14 mechanisch aufgebrochen, so daß sich Öffnungen 17 in den Zellenwänden 15 und 16 bilden. Dabei werden Stege 13 der Zellenwände mechanisch soweit verformt, daß die einzelnen Zellen sowie die Raummatrix 18 des Formgebildes ihre mechanischen Festigkeiten verlieren. Dies kann dazu führen, daß die oberen Schichten des Formgebildes 11 aus einem starren Schaum kollabieren und somit die Kunststoffschaumfolie weich wird. Die voranstehenden Ausführungen gelten auch für weiche Schäume aus Polyethylen und daraus abgeleiteten Schäumen.

In Figur 1b ist ein Formgebilde 1 nach der Erfindung aus einem thermoplastischen Kunststoff gezeigt, bei dem Zellen 2 und 4 polyederähnliche Gestalt mit einer maximalen Abmessung ≤ 1,0 mm, insbesondere ≤0,4 mm, besitzen und aneinander angrenzen. Eine Oberfläche 10 des Formgebildes 1 ist anfänglich geschlossen, wird jedoch durch mechanisches Bearbeiten, wie Abschaben, Ritzen, Perforieren oder durch Abkühlen und gleichzeitiges Dehnen während der Extrusion geöffnet. Beim Perforieren handelt es sich um ein sogenanntes Nadeln der Oberfläche 10 mit einem nadelförmigen Werkzeug 9. Die Zellen 2 und 4 bilden eine Raummatrix 8 oder ein Zellengerüst und sind gestaltsmäßig unversehrt, d.h. Zellenwände 5 und 6, die mit Löchern bzw. Öffnungen 7 versehen sind, weisen keine mechanischen Deformationen auf. Jeweils zwei Wände 5, 6 jeder offenen Zelle 4 besitzen derartige Löcher oder Öffnungen 7. Zu beiden Seiten jeder Öffnung 7 befinden sich Stege 3, die im Vergleich zu dem Formgebilde 11 in Figur 1a nicht verformt sind. Mit der Bezugszahl 2 sind die unmittelbar an die Oberfläche 10 anschließenden Zellen bezeichnet, während die darunterliegenden Zellen mit der Bezugszahl 4 belegt sind. Die Löcher 7 haben gleiche oder unterschiedliche Abmessungen und haben kreisförmigen, ovalen, elliptischen oder längsgestreckten Umriß.

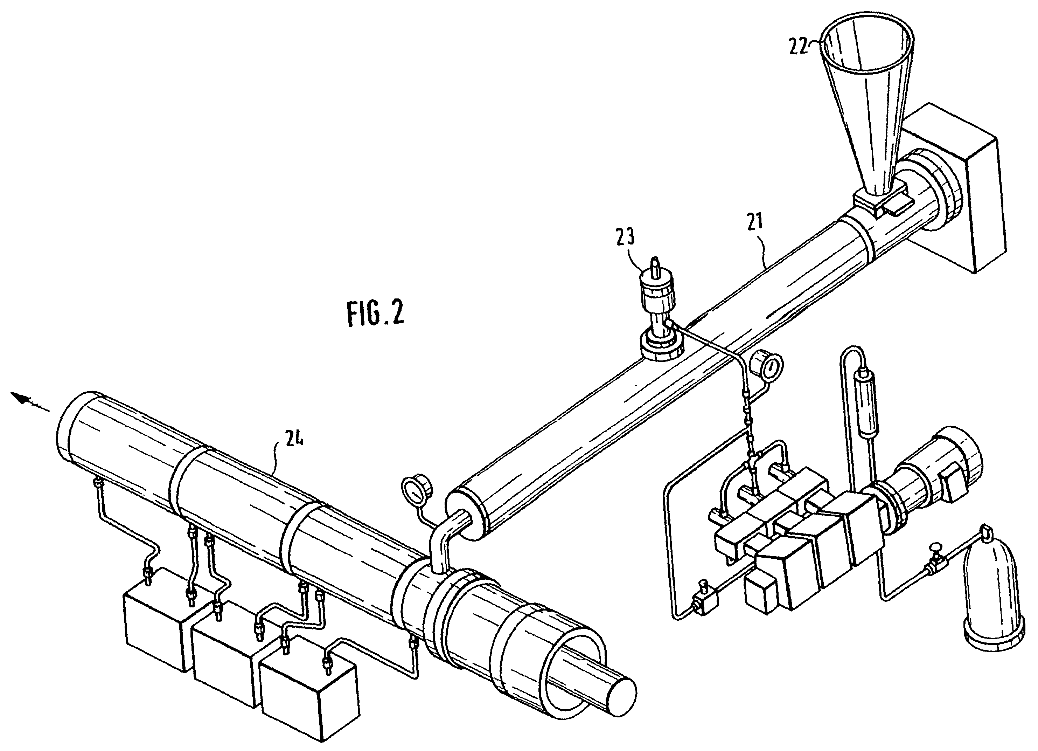

In Figur 2 ist beispielsweise perspektivisch eine Extrusionsanlage zur Herstellung des erfindungsgemäßen Formgebildes 1 dargestellt, wobei sich diese Anlage nicht von einer herkömmlichen Anlage zur Herstellung von geschlossenzelligen Kunststoffschäumen unterscheidet. Ein erster Extruder 21 wird über einen Einfülltrichter 22 mit einem Kunststoffgranulat, vermischt mit einem Nukleierungsmittel, beschickt. In dem Schneckenextruder wird die Mischung aus Kunststoffgranulat und Nukleierungsmittel homogen gemischt und, je nach der Art des Kunststoffgranulats, durch Erhitzen auf eine Temperatur bis zu 320 °C die Mischung aufgeschmolzen. Die Kunststoffschmelze wird im ersten Extruder 21 mit einem Treibmittel über einen Treibmittel-Injektor 23 mit hohem Druck von bis zu 350 bar beaufschlagt. Dieses Treibmittel wird homogen mit der Kunststoffschmelze vermischt und einem zweiten Extruder 24 zugeleitet, in welchem die Kunststoffschmelze auf eine Massetemperatur im Bereich der Untergrenze des pseudoplastischen viskosen Temperaturbereiches, z.B. von 120 bis 260 °C, vor der Extrusion abgekühlt wird. Diese Massetemperatur liegt um 10 bis 20 % höher als die Massetemperatur beim Extrudieren von Kunststoffschmelzen zu geschlossenzelligen Kunststoffschäumen. Beispielsweise beträgt die Massetemperatur einer Kunststoffschmelze, deren Basisstoff COC ist, etwa 200 °C, während die Massetemperatur von COC beim Austritt an der Extrusionsdüse bei etwa 175 °C liegt. Die Temperatur ist eine der Steuerungsvariablen. Daneben kann auch mit Variablen, wie Dichte, Zellengröße und Düsendruck, gearbeitet werden.

Bei der Herstellung von geschlossenzelligen Kunststoffschäumen entfaltet der Druck des Treibmittels bzw. Treibgases bei etwa 170 bis 175 °C während des Austritts aus der Extrusionsdüse die Wirkung, daß die Kunststoffschmelze durch Abkühlung vom plastischen in den annähernd elastischen Zustand übergeführt wird. An der Extrusionsdüse tritt dabei eine rasche Verdampfung und Aufschäumung des Treibmittels und ein Temperaturverlust von etwa 20 °C ein. Danach kühlt der extrudierte Kunststoffschaum langsam weiter ab.

Die Ausbildung von geschlossenzelliger und offenzelliger Struktur in einem Kunststoffschaum hängt im wesentlichen von der Temperatur der Kunststoffschmelze an der ringförmigen Extrusionsdüse ab. Die Zellen des Kunststoffschaumes bleiben bis zu einer Temperatur von etwa 175 °C weitgehend geschlossen. Bei weiter ansteigenden Temperaturen der Schmelze am Austritt der ringförmigen Extrusionsdüse beginnen sich Zellen des Schaumes zu öffnen, und bei etwa 195 °C Austrittstemperatur der Schmelze sind die Zellen zum größten Teil geöffnet. Der Temperaturbereich zur Herstellung von geschlossenzelligen COC-Schäumen liegt im Bereich von 160 bis 185 °C. Dem Basisrohstoff COC ist hierbei als Nuklierungsmittel ein endothermes und selbstnukleierendes Treibmittel mit 70 % aktivem Anteil auf der Trägerbasis LDPE, wie Hydrocerol CF 70 der Fa. Boehringer/Ingelheim, Deutschland, oder Talkum beigefügt. Der aktive Anteil von Hydrocerol CF 70 besteht aus Natriumbicarbonat und Zitronensäure. Die Ausgangsstoffe des Schaumes können auch COC-Granulat, Hydrocerol CF 70 oder Talkum als Nukleierungsmittel und ein Fremd-Polymer sein. Eine offenzellige Struktur des COC-Schaumes wird durch Zugabe eines Fremd-Polymers zu der Standardrezeptur des COC-Schaumes im üblichen Temperaturbereich von 160 bis 185 °C, insbesondere 175 °C, erzielt.

Bei den thermoplastischen Polymeren, die zu Kunststoffschaum verarbeitet werden können, handelt es sich um Polymere aus der Gruppe der Polyolefine, wie Copolymere auf der Basis von Cycloolefinen und Ethylen (COC), und homopolymere COCs wie voranstehend beschrieben. Ebenso geeignet sind COCs in Mischung mit Polyethylen (HDPE, LDPE, LLDPE), chloriertes Polyethylen, Polypropylen (PP), Polypropylencopolymere (PPC), Ethylenvinylacetatcopolymer (EVA), halogenierte Polyolefine; aus der Gruppe der Styrolpolymere, wie Polystyrol (PS), Polystyrolcopolymere (PSC), Acrylonitrilbutadienstyrolcopolymere (ABS), Styrolmaleinsäureanhydrid, schlagfeste Polystyrole (SPS); aus der Gruppe der Polyester, wie Polyalkylenterephthalat; aus Ethylenpropylenterpolymerisat, Polyvinylchlorid (PVC), und/oder Polyphenylenoxid. Diese Aufzählung ist nur beispielhaft und erhebt keinen Anspruch auf Vollständigkeit.

Ebenso ist es möglich, Kunststoffschäume aus thermoplastischen Polymeren oder Blends thermoplastischer und nicht-thermoplastischer Polymere, aus Polymeren, Copolymeren oder Blends thermoplastischer Polymere und/oder Copolymere herzustellen. Derartige Blends können beispielsweise aus COC/-Polyethylen, COC/Polybutylen, COC/Polyethylen/Polybutylenterpolymeren, bestehen.

Die Ausgangsstoffe der Kunststoffschäume sind dann jeweils Granulat, Pulver oder Masterbatch aus einem der voranstehend angeführten Polymere, Copolymere oder Blends, Nukleierungsmittel und Treibmittel.

Im allgemeinen ist der Gewichtsanteil des Fremd-Polymers kleiner als der Gewichtsanteil des COC und liegt in der Größenordnung von 0,15 bis 15 Gew.%, insbesondere 10 Gew-%. Abhängig vom Extrudertyp kann es auch notwendig sein, den Anteil an Fremd-Polymer über 10 Gew.% bis auf 15 Gew.% anzuheben. Diesen Ausgangsstoffen können auch Additive, wie beispielsweise Benetzungsmittel, hinzugefügt werden, um die Aufnahmefähigkeit bzw. das Absorptionsvermögen für insbesondere polare Flüssigkeiten zu erhöhen. Die Dichten der Kunststoffschäume liegen im Bereich von 0,02 bis 0,350 g/cm³, bevorzugt von 0,070 bis 0,240 g/cm³, und insbesondere von 0,085 bis 0,230 g/cm³ während die Aufnahmefähigkeit für polare Flüssigkeiten das 1- bis 30-fache, insbesondere das 4- bis 10-fache und für andere Flüssigkeiten das 4- bis 7-fache der Schaumdichte beträgt.

Das Fremd-Polymer wird in der Weise gewählt, daß es nur sehr geringe Affinität mit der Polymermatrix besitzt, d.h. mit anderen Worten, daß die Benetzbarkeit des Fremd-Polymers in der Polymermatrix nahezu Null ist. Eine mögliche Erklärung des Wirkmechanismus des Fremd-Polymers wird nachstehend gegeben, wodurch jedoch eine andere Hypothese zum Wirkmechanismus keineswegs ausgeschlossen werden soll.

Unter dem Begriff "Fremd-Polymer" ist in diesem Zusammenhang ein amorpher, kristalliner oder teilkristalliner Thermoplast zu verstehen, der aufgrund seiner Unverträglichkeit in der Polymerschaummatrix eine disperse Phase bildet. Als morphologische Form liegt eine tröpfchenförmige Struktur vor, wie sie in Fig. 3a gezeigt ist. Hierbei handelt es sich um eine COC-Matrix, in der das Fremd-Polymer, im vorliegenden Fall handelt es sich um Polyethylenterephthalatpartikel, in der COC-Schaummatrix eingeschlossen ist. Wie die vergrößerte Detailansicht in Fig. 3a eines derartigen PET-Partikels in der COC-Schaummatrix zeigt, sind die Adhäsionskräfte an den Phasengrenzflächen zwischen der COC-Schaummatrix und dem Polyethylenterephthalatpartikel sehr niedrig. Beim Schaumbildungsvorgang, bei dem starke Zellenwanddehnungen hervorgerufen werden, kommt es zu einer Rißbildung an der Phasengrenzfläche, was vor allem bei hauchdünnen Zellenwänden zu der offenzelligen Struktur des COC-Schaumes führt.

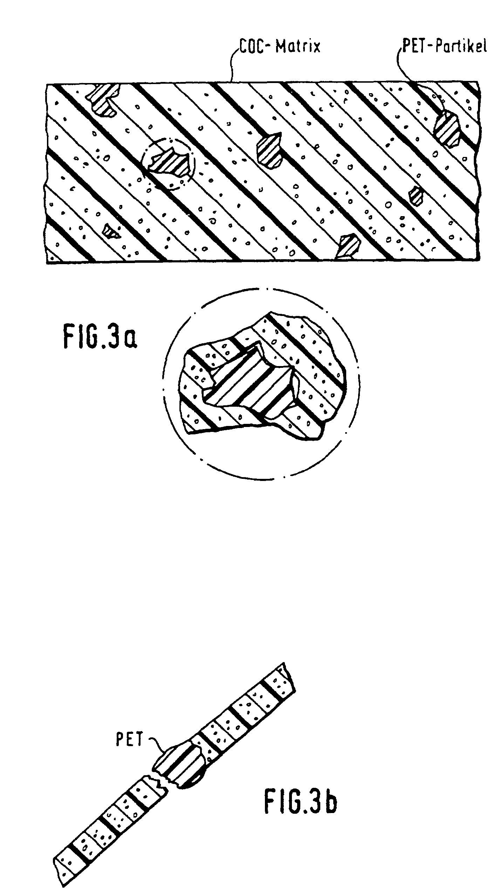

Die Rißbildung in einer Zellenwand ist im Detail in Figur 3b dargestellt. Die Zellenwandstärke beträgt ca. 3 µm, und es ist leicht zu erkennen, daß infolge der Rißbildung an der Phasengrenzfläche der beiden unterschiedlichen Polymere die Zellenwand in ihrer Gestalt weitgehend erhalten bleibt und nicht deformiert ist.

Als Treibmittel werden gesättigte, ungesättigte oder cyclische Kohlenwasserstoffe, halogenierte Kohlenwasserstoffe, Alkohole, Wasser, Stickstoff, Kohlendioxid oder Mischungen hiervon eingesetzt. Bevorzugt werden die Treibmittel aus der Gruppe Methan, Ethan, Ethen, Propan, Propen, n-Butan, 1-Buten, 2-Buten, Isobutan, Isobuten, n-Pentan, Isopentan, 2,2-Dimethylpropan, Cyclopentan ausgewählt. So kann beispielsweise das Treibmittel eine Mischung aus Propan und n-Butan im Gewichtsverhältnis 30 bis 80 Gew.% Propan zu 20 bis 70 Gew.% n-Butan sein, ebenso kann, insbesondere bei der Herstellung von COC-Schaum, nur n-Butan eingesetzt werden. Als Nukleierungsmittel werden im allgemeinen Kohlensäure, Wasser, Stickstoff, Talkum, Kreide, Natriumcarbonat, Natriumbicarbonat und/oder Zitronensäure mit einem Gewichtsanteil von 0,1 bis 5 Gew.% an der Polymerschmelze zugesetzt. Das Fremd-Polymer wird im allgemeinen aus der Gruppe Polyethylenterephthalat, Polystyrol, Polymethylmethacrylat, Polyurethan, Polytetrafluorethylen ausgewählt. Dabei kann das Fremd-Polymer als Granulat, Masterbatch oder Pulver zugesetzt sein, und sein Gewichtsanteil an der Polymerschmelze liegt im Bereich von 0,15 bis 15 Gew.%.

Beim Hinzufügen eines Fremd-Polymers zu den Ausgangsstoffen der herzustellenden Polymerschmelze kann die optimale Temperatur von etwa 175 °C am Austritt der Extrusionsdüse beibehalten werden. Ohne Zusatz eines Benetzungsmittels sind die erhaltenen Kunststoffschaumfolien im allgemeinen schon dafür geeignet, apolare Flüssigkeiten, das sind ölähnliche Flüssigkeiten, zu absorbieren. Anders verhält es sich mit der Absorption von polaren Flüssigkeiten, wie z.B. Wasser, da die Wassertröpfchen aufgrund ihrer Oberflächenspannung im allgemeinen eine kugelähnliche Gestalt annehmen und dadurch der Phasengrenzwinkel zwischen der Oberfläche der Kunststoffschaumfolie und den Tröpfchen der polaren Flüssigkeit meistens zu groß ist, so daß es nicht zu einer Absorption der polaren Flüssigkeit kommt. Zur Verkleinerung des Phasengrenzwinkels einer polaren Flüssigkeit gegenüber den Zellenwänden bzw. gegenüber der Oberfläche der Kunststoffschaumfolie wird der Polymerschmelze Benetzungsmittel aus kation-, anionaktiven, amphoteren oder nicht-ionogenen Verbindungen hinzugesetzt. Bei diesen Benetzungsmitteln handelt es sich u.a. um Alkylsulfonate, von denen eines in Masterbatchform beispielsweise einer COC-Schmelze zugegeben wird. Der Gewichtsanteil des oder der Alkylsulfonate an der Schmelze beträgt im allgemeinen 0,1 bis 10 Gew.%, insbesondere 0,1 bis 5 Gew.% und bevorzugt 0,5 bis 3 Gew.-%.

Zur Erhöhung der Absorptionsgeschwindigkeit von polaren Flüssigkeiten wird beispielsweise eine der Oberflächen der Kunststoffschaumfolie einer Corona-, Corona-Aerosol-Behandlung unterzogen. Ebenso ist es möglich, eine Molekularbeschichtung entsprechend dem sogenannten Nebelverfahren an einer der Oberflächen der Kunststoffschaumfolie vorzunehmen, um die Absorptionsgeschwindigkeit für polare Flüssigkeiten zu erhöhen und um aus einer wäßrigen Flüssigkeit, Emulsion oder dergleichen entweder den polaren oder apolaren Bestandteil selektiv zu absorbieren.

Die erhaltenen offenzelligen Kunststoffschaumfolien können in verschiedenen Dicken hergestellt werden und sind zu Platten, Profilen und Blöcken verarbeitbar. Ihre Anwendung finden sie vor allem als Saugfilter, Verpackung von Arzneimitteln, elektrisches Isoliermaterial, Feuchtigkeit aufnehmendes Material udgl.

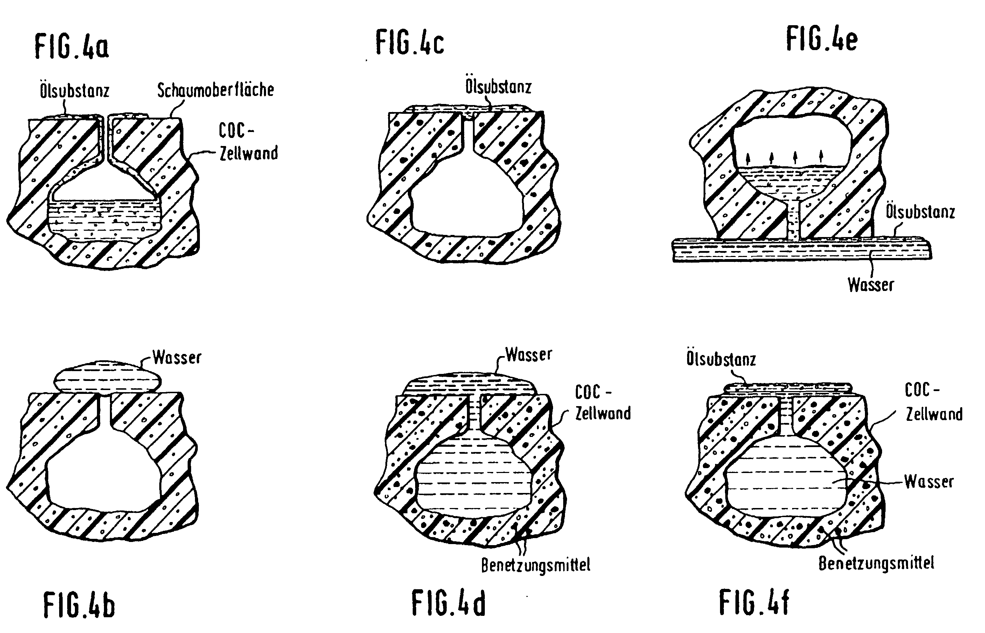

In den Figuren 4a bis 4f sind schematisch Schnittdarstellungen im vergrößerten Detail von Zellenstrukturen von Kunststoffschaumfolien dargestellt und deren Flüssigkeitsabsorptionsverhalten angedeutet.

Figur 4a zeigt einen offenzelligen COC-Schaum, der mit der Basisrezeptur, wie sie nachstehend noch anhand der Beispiele angegeben wird, hergestellt wurde. Die Ausgangsstoffe dieses COC-Schaumes sind COC-Granulat und Hydrocerol CF 70 als Nukleierungsmittel. Die Offenporigkeit wird durch die erhöhte Temperatur am Austritt der Extrusionsdüse erzielt. Wie der Figur 4a zu entnehmen ist, besitzt ein derartiger COC-Schaum ein großes Absorptionsvermögen für eine apolare Flüssigkeit, beispielsweise ein Öl, was gleichbedeutend damit ist, daß diese Flüssigkeit von der Schaumoberfläche unproblematisch in das Innere der offenen Zellen hineinfließen kann. Anders verhält sich das Absorptionsvermögen für eine polare Flüssigkeit, wie beispielsweise Wasser, wie Figur 4b erkennen läßt. Aufgrund der hohen Oberflächenspannung des Wassertropfens bildet sich ein relativ großer Phasengrenzwinkel zwischen der Oberfläche des COC-Schaumes und dem Wassertropfen aus, wodurch ein Eindringen des Wassertropfens in die offenen Zellen weitgehend verhindert wird. Das gleiche Absorptionsverhalten für apolare und polare Flüssigkeiten zeigen auch offenzellige COC-Schäume, bei deren Herstellung ein Fremd-Polymer der Basisrezeptur zugesetzt wird und die Temperatur an der Extrusionsdüse bei etwa 190 bis 195 °C liegt.

Die Figuren 4d und 4f zeigen das Absorptionsverhalten für polare und apolare Flüssigkeiten, wenn der Basisrezeptur bei der Herstellung des COC-Schaumes noch zusätzlich ein Benetzungsmittel hinzugefügt wird, das in den Schnittdarstellungen der Figuren 4d und 4f durch schwarze Punkte in der COC-Matrix bzw. in den COC-Zellenwänden angedeutet ist. Durch das Benetzungsmittel wird der Phasengrenzwinkel polarer Flüssigkeiten, insbesondere von Wasser, so weit herabgesetzt, daß die polare Flüssigkeit ohne Probleme in die offenen Zellen einfließt.

In Figur 4e ist gezeigt, daß die Absorption einer apolaren Flüssigkeit in einem offenzelligen COC-Schaum ohne Benetzungsmittel und ohne Vorbehandlung durch eine Koronaentladung oder eine Korona-Aerosol-Entladung stimuliert, d.h. beschleunigt, werden kann. Dabei kann der COC-Schaum entweder bei erhöhter Temperatur von 195 °C der Extrusionsdüse oder bei der herkömmlichen Temperatur von 175 °C, dann jedoch unter Zusatz eines Fremd-Polymers, hergestellt sein.

Aus Figur 4f ist zu entnehmen, daß durch eine Koronavorbehandlung die polare Flüssigkeitsabsorption in einem COC-Schaum, der Benetzungsmittel enthält, stimuliert, d.h. beschleunigt werden kann. Bei den Ausführungsformen des COC-Schaumes gemäß den Figuren 4e und 4f kommt es zu einer selektiven Absorption der apolaren (Öl) bzw. polaren (Wasser) Flüssigkeit aus einer Flüssigkeit, die beide Bestandteile enthält.

Im folgenden sind einige Beispiele für offenzellige COC-Schäume mit einer Schaumdichte von 205-210 g/l in Tabelle 1 angegeben. Im Beispiel A wird für den COC-Schaum die Normalrezeptur der Ausgangsstoffe der COC-Schmelze verwendet, d.h. COC-Granulat mit 96,7 Gew.%, Hydrocerol CF 70 als Nukleierungsmittel mit 0,2 Gew.%, als Treibmittel Butan oder ein halogenierter Kohlenwasserstoff mit 3 Gew.% und als Rest ein Gleitmittel. Die Temperatur am Austritt der Extrusionsdüse beträgt etwa 191 °C. Bei den Beispielen B und C ist jeweils ein Fremd-Polymer in der Größenordnung von 10 Gew.% zugesetzt, während der Anteil des Treibmittels 2,30 Gew.% beträgt und die Anteile des Nukleierungsmittels 0,5 Gew.% und des Gleitmittels 0,1 Gew.% ausmachen. Die Temperatur der Düse beträgt 175 °C während des Extrusionsvorgangs. Dementsprechend beträgt der Gewichtsanteil des COC-Granulats im Beispiel D 93,7 Gew.%. Bei den Beispielen B bis D sind jeweils 0,1 Gew.% Gleitmittel, beispielsweise ein weißes Mineralöl, wie Medinol 85 der Fa. Witco, Niederlande, zugesetzt, wodurch der so erhaltene COC-Schaum ein hohes selektives Absorptionsvermögen für polare bzw. wäßrige Flüssigkeiten besitzt. Den Beispielen C und D sind noch Benetzungsmittel, wie Alkylsulfonat, in einer Größenordnung von 3 Gew.% beigefügt.

Bei den Beispielen A bis D ist vor allem bemerkenswert, daß ein offenzelliger Schaum hergestellt wurde, der an der einen Oberfläche offenzellig bzw. offenporig ist, ohne daß eine zusätzliche mechanische Bearbeitung, wie Perforieren, erforderlich ist. Der Schaum wurde durch Blasen geformt, wobei die Außenseite geschlossenzellig und die Innenseite der rohrförmigen Kunststoffschaumfolie offenzellig ist. Die Offenzelligkeit rührt von der geringeren Abkühlung der Innenseite im Vergleich zur Außenseite her.

Bei den voranstehend beschriebenen COC-Basispolymeren handelt es sich um amorphe, transparente Copolymere auf der Basis von Cycloolefinen und Ethylen. COC sind eine neue Klasse polymerer Werkstoffe, deren Eigenschaftsprofil bei der Polymerisation in einem weiten Bereich variiert werden kann. Sie zeichnen sich durch eine außerordentlich geringe Wasseraufnahme, hervorragende Sperrwirkung gegen Wasserdampf, Wärmeformbständigkeit bis zu 170 °C, sehr gute Hydrolysebeständigkeit, sehr gute Beständigkeit gegen Säuren und Laugen und sehr gute elektrische Isoliereigenschaften aus. Thermoplastische Verarbeitbarkeit bzw. die Fließfähigkeit sind ausgezeichnet, ebenso die Steifheit, Festigkeit und Härte der verarbeiteten COC. COC wird in verschiedenen Lieferformen, beispielsweise von der Fa. Hoechst, Bundesrepublik Deutschland, geliefert. Aufgrund ihres olefinischen Charakters sind alle COC-Typen beständig gegen hydrolytischen Abbau und gegen die Einwirkung von Säuren und Laugen sowie polaren Lösungsmitteln, wie Methanol. Insbesondere ist die chemische Beständigkeit von COC gegen Methanol, Ethanol, Isopropanol, Aceton, Butanon sowie Benzaldehyde gegeben. Von unpolaren organischen Lösungsmitteln, wie Toluol oder Benzin, wird COC angelöst. Der Einsatz von COC in Gegenwart von verschiedenen Chemikalien ist stets nur unter genauer Kenntnis des Anforderungsprofil zu treffen und ist im Zweifelsfall in einem Praxistest zu überprüfen. Da sich COC im allgemeinen durch die außerordentliche Reinheit des Produkts auszeichnen und durch Kontakt mit Wasser oder Isopropanol nach 24 Stunden bei 70 °C innerhalb der Nachweisgrenzen keine Substanzen ausgewaschen werden, darüber hinaus eine überragende Sperrwirkung gegen Wasserdampf und außerordentlich geringe Wasseraufnahme besitzen, sind sie insbesondere für medizinische Applikationen geeignet, z.B. zum Verpacken von Pharmazeutika. Ebenso geeignet sind die COC zum Verpacken von Lebensmitteln oder stark hygroskopischen Gütern. Bei dem Einsatz der COC als elektrisches Isoliermaterial sollen diese weitgehend frei von Benetzungsmitteln, wie Alkylsulfonat, sein.

**Tabelle 1**

| | A Normal-rezeptur | B Selektive Absorption für ölartige Flüssigkeiten | C Selektive Absorption für wäßrige Flüssigkeiten | D Selektive Absorption für wäßrige Flüssigkeiten |
|---|---|---|---|---|
| COC-Granulat | 96,70 % | 87,1 % | 84,1 % | 93,7 % |
| | | | | |
| Nukleierungsmittel (z.B. Na-bicarbonat und Zitronensäure) | 0,2 % | 0,5 % | 0,5 % | 0,2 % |
| | | | | |
| Fremd-Polymere (z.B. PET) | - | 10 % | 10 % | - |
| | | | | |
| Gleitmittel | 0,10 % | 0,1 | 0,1 % | 0,1 % |
| | | | | |
| Benetzungsmittel | - | - | 3 % | 3 % |
| | | | | |
| Treibmittel (z.B. Alkane, wie Butan, halogenierte Kohlenwasserstoffe) | 3 % | 2,3 % | 2,30 % | 3 % |
| Konstellation Zellenstruktur (fein) ≤0,4 mm | offen | offen | offen | offen |

## Patentansprüche

1. Formgebilde aus einem thermoplastischen Kunststoff, der zumindest 10 Vol. % offene Zellen enthält, die eine polyederähnliche Gestalt besitzen und aneinander angrenzen, wobei Stege (3) der in einer Raummatrix (8) angeordneten polyederähnlichen Zellen (2, 4) gestaltsmäßig unversehrt sind und zumindest zwei Wände (5, 6) jeder offenen Zelle (4) Öffnungen (7) aufweisen, unter Beibehaltung der mechanischen Festigkeit der Raummatrix (8), wobei die Ausgangsstoffe des Kunststoffschaumes ein Fremd-Polymer und ein Basispolymer, Nukleierungs- und Treibmittel sind und das Basispolymer aus der Gruppe der Homo- und Copolymere von polycyclischen Olefinen ausgewählt ist.

2. Formgebilde nach Anspruch 1, **dadurch gekennzeichnet, daß** zumindest ein Teilbereich einer der geschlossenen glatten Oberflächen des Formgebildes (1) geöffnet ist.

3. Formgebilde nach Anspruch 1, **dadurch gekennzeichnet, daß** der Kunststoffschaum thermoplastische Cycloolefinhomopolymere und/oder Cycloolefincopolymere, Blends von Cycloolefincopolymeren oder Blends von Cycloolefincopolymeren und nicht-thermoplastischen Polymere enthält.

4. Formgebilde nach Anspruch 1, **dadurch gekennzeichnet, daß** das Nukleierungsmittel Talkum, Kreide, Natriumcarbonat, Natriumbicarbonat und/oder Zitronensäure mit bis zu 3 Gew.% und das Treibmittel Butan, Propan, CO₂ oder Mischungen hiervon mit bis zu 5 Gew.% sind.

5. Formgebilde nach Anspruch 1, **dadurch gekennzeichnet, daß** der Gewichtsanteil des Fremd-Polymers kleiner als der Gewichtsanteil des Basispolymers ist.

6. Formgebilde nach Anspruch 5, **dadurch gekennzeichnet, daß** der Gewichtsanteil des Fremd-Polymers 0,15 bis 15 Gew.% beträgt.

7. Formgebilde nach den Ansprüchen 4 und 6, **dadurch gekennzeichnet, daß** der Kunststoffschaum als Ausgangsstoffe Cycioolefincopolymergranulat mit ca. 87 Gew.%, eine Mischung aus Natriumbicarbonat und Zitronensäure mit ca. 0,5 Gew.%, Butan mit bis zu 2,7 Gew.% und kristallines Polyethylenterephthalat mit bis zu 10 Gew.% enthält.

8. Formgebilde nach Anspruch 5, **dadurch gekennzeichnet, daß** das Basispolymer ein Cycloolefincopolymer ist und daß das Fremd-Polymer aus der Gruppe Polyethylenterephthalat, Polymethylmethacrylat, Polytetrafluorethylen, Polyurethan ausgewählt ist.

9. Formgebilde nach Anspruch 1, **dadurch gekennzeichnet, daß** der Kunststoffschaum als Ausgangsstoffe neben Cycloolefincopolymergranulat, 0,15 Gew.% einer Mischung aus Natriumbicarbonat und Zitronensäure, 2,6 Gew.% Treibmittel aus der Gruppe Butan, Propan, Wasserstoffluoralkane, und 0,10 Gew.% eines Mineralöls enthält.

10. Formgebilde nach Anspruch 1, **dadurch gekennzeichnet, daß** die Dichte des Kunststoffschaums im Bereich von 0,070 bis 0,230 g/cm³ liegt.

11. Formgebilde nach den Ansprüchen 9 und 10, **dadurch gekennzeichnet, daß** die Aufnahmefähigkeit des Kunststoffschaumes für polare und apolare Flüssigkeiten 4 bis 7 Gramm pro einem Gramm Kunststoffschaum beträgt.

12. Formgebilde nach Anspruch 1, **dadurch gekennzeichnet, daß** die Zellen eine maximale Abmessung von ≤ 1,0 mm aufweisen.

13. Verfahren zur Herstellung eines Formgebildes aus einem thermoplastischen Kunststoffschaum, der zumindest 10 Vol.% offene Zellen enhält, **dadurch gekennzeichnet, daß** eine Polymermischung aus einem Fremd-Polymer und zumindest einem Cycloolefincopolymer und Nukleierungsmittel in einem ersten Extrusionsschritt bei einer Temperatur bis zu 320 °C aufgeschmolzen wird, daß ein Treibmittel unter hohem Druck von bis zu 350 bar am Ende des ersten Extrusionsschrittes in die Polymerschmelze injiziert und mit dieser homogen vermischt wird, daß in einem zweiten Extrusionsschritt die Polymerschmeize auf eine Massetemperatur im Bereich der Untergrenze des pseudoplastischen viskosen Temperaturbereiches von 120 °C bis 260 °C, unmittelbar vor der Extrusion abgekühlt wird, wobei durch Zusatz von Fremd-Polymer die Massetemperatur bis auf die Temperatur abgesenkt wird, die bei der Extrusion von geschlossenzelligen Kunststoffschäumen aus Cycloolefincopolymeren benötigt wird.

14. Verfahren nach Anspruch 13, **dadurch gekennzeichnet, daß** zumindest eine der Oberflächen des extrudierten Formgebildes durch mechanisches Bearbeiten oder durch Abkühlen und gleichzeitiges Dehnen beim Austritt aus der Extrusionsdüse teilweise geöffnet wird.

15. Verfahren nach Anspruch 13, **dadurch gekennzeichnet, daß** als Treibmittel gesättigte, ungesättigte oder cyclische Kohienwasserstoffe, halogenierte Kohlenwasserstoffe, Alkohole, Wasser, Stickstoff, Kohlendioxid oder Mischungen hiervon eingesetzt werden.

16. Verfahren nach Anspruch 15, **dadurch gekennzeichnet, daß** das Treibmittel aus der Gruppe Methan, Ethan, Ethen, Propan, Propen, n-Butan, 1-Buten, 2-Buten, Isobutan, Isobuten, n-Pentan, Isopentan, 2,2-Dimethylpropan, Cyclopentan ausgewählt wird.

17. Verfahren nach Anspruch 16, **dadurch gekennzeichnet, daß** das Treibmittel eine Mischung aus Propan und n-Butan im Gewichtsverhältnis 30 bis 80 Gew.% Propan zu 20 bis 70 Gew.% n-Butan ist.

18. Verfahren nach Anspruch 16, **dadurch gekennzeichnet, daß** das Treibmittel n-Butan mit einem Anteil von 2,10 bis 4 Gew.% an den Ausgangsstoffen der Polymerschmelze ist.

19. Verfahren nach Anspruch 13, **dadurch gekennzeichnet, daß** ein Fremd-Polymer aus der Gruppe Polyethylenterephthalat, Polymethylmethacrylat, Polyurethan, Polytetrafluorethylen, dem Cycloolefincopolymer als Basispolymer der Polymerschmelze zugesetzt wird und daß durch das Fremd-Polymer in der Polymerschmelze die Zellenwände ohne mechanische Zerstörungen der Stege der Zellenwände geöffnet werden.

20. Verfahren nach Anspruch 19, **dadurch gekennzeichnet, daß** das Fremd-Polymer als Granulat, Masterbatch oder Pulver zugesetzt wird und sein Gewichtsanteil an der Polymerschmelze 0,15 bis 15 Gew.-% beträgt.

21. Verfahren nach Anspruch 13, **dadurch gekennzeichnet, daß** als Nukleierungsmittel Kohlensäure, Wasser, Stickstoff, Talkum, Kreide, Natriumcarbonat oder Natriumbicarbonat und/oder Zitronensäure mit einem Gewichtsanteil von 0,10 bis 5 Gew.% an der Polymerschmelze zugesetzt wird.

22. Verfahren nach Anspruch 13, **dadurch gekennzeichnet, daß** zur Verkleinerung des Phasengrenzwinkels einer polaren Flüssigkeit gegenüber den Zellenwänden des Formgebildes der Polymerschmelze Benetzungsmittel aus kation-, anionaktiven, amphoteren oder nicht-ionogenen Verbindungen zugegeben werden.

23. Verfahren nach Anspruch 22, **dadurch gekennzeichnet, daß** die Zudosierung von Alkylsulfonaten als Benetzungsmittel in Masterbatchform geschieht und daß der Gewichtsanteil des oder der Alkylsulfonate an der Polymerschmelze 0,1 bis 10 Gew.-% beträgt.

24. Verfahren nach Anspruch 15, **dadurch gekennzeichnet, daß** zur Erhöhung der Absorptionsgeschwindigkeit von polaren Flüssigkeiten eine der Oberflächen des Formgebildes einem Korona-, Korona-Aerosol- oder einem Molekularbeschichtungsverfahren (MCS) ausgesetzt wird.

25. Verwendung des Formgebildes nach einem oder mehreren der Ansprüche 1 bis 12 als Verpackungsmaterial für Pharmazeutika, Lebensmittel oder stark hygroskopische Güter.

26. Verwendung des Formgebildes nach einem oder mehreren der Ansprüche 1 bis 12 als Saugfilter für polare und/oder apolare Flüssigkeiten.

27. Verwendung des Formgebildes nach einem oder mehreren der Ansprüche 1 bis 12 als benetzungsmittelfreies elektrisches Isoliermaterial.

28. Verwendung des Formgebildes nach einem oder mehreren der Ansprüche 1 bis 12 als schwerentflammbares Wärmedämmmaterial bis zu 170 °C.

## Claims

1. A shaped article comprising a thermoplastic polymer which contains at least 10% by volume of open cells which have a polyhedron-like shape and adjoin one another, wherein webs (3) of the polyhedron-like cells (2, 4) arranged in a three-dimensional matrix (8) are intact in terms of shape and at least two walls (5, 6) of each open cell (4) have openings (7), with maintenance of the mechanical strength of the three-dimensional matrix (8), wherein the starting materials for the plastic foam are a base polymer and a foreign polymer, nucleating and blowing agents and the base polymer is selected from the group consisting of homopolymers and copolymers of polycyclic olefins.

2. A shaped article as claimed in claim 1, wherein at least part of one of the closed smooth surfaces of the shaped article (1) is open.

3. A shaped article as claimed in claim 1, wherein the plastic foam comprises thermoplastic cycloolefin homopolymers and/or cycloolefin copolymers, blends of cycloolefin copolymers or blends of cycloolefin copolymers and non-thermoplastic polymers.

4. A shaped article as claimed in claim 1, wherein the nucleating agent is talc, chalk, sodium carbonate, sodium bicarbonate and/or citric acid in an amount of up to 3% by weight, and the blowing agent is butane, propane, CO₂ or mixtures thereof in an amount of up to 5% by weight.

5. A shaped article as claimed in claim 1, wherein the proportion by weight of the foreign polymer is less than the proportion by weight of the base polymer.

6. A shaped article as claimed in claim 5, wherein the proportion by weight of the foreign polymer is from 0.15 to 15% by weight.

7. A shaped article as claimed in claims 4 and 6, wherein the plastic foam comprises as starting materials cycloolefin copolymer granules in an amount of about 87% by weight, a mixture of sodium bicarbonate and citric acid in an amount of about 0.5% by weight, butane in an amount of up to 2.7% by weight and crystalline polyethylene terephthalate in an amount of up to 10% by weight.

8. A shaped article as claimed in claim 5, wherein the base polymer is a cycloolefin copolymer and the foreign polymer is selected from the group consisting of polyethylene terephthalate, polymethyl methacrylate, polytetrafluoroethylene and polyurethane.

9. A shaped article as claimed in claim 1, wherein the plastic foam comprises as starting materials, in addition to cycloolefin copolymer granules 0.15% by weight of a mixture of sodium bicarbonate and citric acid, 2.6% by weight of blowing agent selected from the group consisting of butane, propane and hydrogenfluoroalkanes, and 0.10% by weight of a mineral oil.

10. A shaped article as claimed in claim 1, wherein the density of the plastic foam is in the range from 0.070 to 0.230 g/cm³.

11. A shaped article as claimed in claims 9 and 10, wherein the uptake capacity of the plastic foam for polar and nonpolar liquids is from 4 to 7 gram per gram of plastic foam.

12. A shaped article as claimed in claim 1, wherein the cells have a maximum dimension of ≤ 1.0 mm.

13. A process for producing a shaped article comprising a thermoplastic synthetic foam which contains at least 10% by volume of open cells, which comprises melting a polymer mixture comprising a foreign polymer and at least one cycloolefin copolymer and nucleating agent in a first extrusion step at a temperature of up to 320°C, injecting a blowing agent into the polymer melt under a high pressure of up to 350 bar at the end of the first extrusion step and mixing it homogeneously with the polymer melt, and, in a second extrusion step, cooling the polymer melt to a composition temperature in the region of the lower limit of the pseudoplastic viscous temperature range from 120°C to 260°C directly prior to extrusion, where addition of foreign polymer lowers the composition temperature to the temperature which is required in the extrusion of closed-cell plastic foams comprising cycloolefin copolymers.

14. The process as claimed in claim 13, wherein at least one of the surfaces of the extruded shaped article is partly opened by mechanical treatment or by cooling and simultaneous stretching on exit from the extrusion die.

15. The process as claimed in claim 13, wherein the blowing agent used comprises saturated, unsaturated or cyclic hydrocarbons, halogenated hydrocarbons, alcohols, water, nitrogen, carbon dioxide or mixtures thereof.

16. The process as claimed in claim 15, wherein the blowing agent is selected from the group consisting of methane, ethane, ethene, propane, propene, n-butane, 1-butene, 2-butene, isobutane, isobutene, n-pentane, isopentane, 2,2-dimethylpropane and cyclopentane.

17. The process as claimed in claim 16, wherein the blowing agent is a mixture of propane and n-butane in a weight ratio of from 30 to 80% by weight of propane to from 20 to 70% by weight of n-butane.

18. The process as claimed in claim 16, wherein the blowing agent is n-butane in an amount of from 2.10 to 4% by weight of the starting materials of the polymer melt.

19. The process as claimed in claim 13, wherein a foreign polymer selected from the group consisting of polyethylene terephthalate, polymethyl methacrylate, polyurethane and polytetrafluoroethylene is added to the cycloolefin copolymer as base polymer of the polymer melt and the foreign polymer in the polymer melt results in opening of the cell walls without mechanical destruction of the webs of the cell walls.

20. The process as claimed in claim 19, wherein the foreign polymer is added as granules, masterbatch or powder and its proportion by weight in the polymer melt is from 0.15 to 15% by weight.

21. The process as claimed in claim 13, wherein the nucleating agent added is carbon dioxide, water, nitrogen, talc, chalk, sodium carbonate or sodium bicarbonate and/or citric acid in an amount of from 0.10 to 5% by weight of the polymer melt.

22. The process as claimed in claim 13, wherein wetting agents comprising cationic, anionic, amphoteric or nonionic compounds are added to the polymer melt to reduce the phase boundary angle between a polar liquid and the cell walls of the shaped article.

23. The process as claimed in claim 22, wherein the metering in of alkylsulfonates as wetting agents occurs in masterbatch form and the proportion of the alkylsulfonate(s) in the polymer melt is from 0.1 to 10% by weight.

24. The process as claimed in claim 15, wherein one of the surfaces of the shaped article is subjected to a corona treatment, corona-aerosol treatment or molecular coating (MCS) to increase the absorption rate of polar liquids.

25. Use of the shaped article as claimed in one or more of claims 1 to 12 as packaging material for pharmaceuticals, foodstuffs or strongly hygroscopic goods.

26. Use of the shaped article as claimed in one or more of claims 1 to 12 as suction filter for polar and/or nonpolar liquids.

27. Use of the shaped article as claimed in one or more of claims 1 to 12 as wetting agent-free electrical insulation material.

28. Use of the shaped article as claimed in one or more of claims 1 to 12 as flame-resistant thermal insulation material at up to 170°C.

## Revendications

1. Structure façonnée en matériau synthétique thermoplastique, qui contient au moins 10% en volume de cellules ouvertes, qui présentent une structure analogue à un polyèdre et qui sont adjacentes, les âmes (3) des cellules (2, 4) analogues à des polyèdres, disposées dans une matrice spatiale (8), ayant un aspect intact et au moins deux parois (5, 6) de chaque cellule ouverte (4) présentant des ouvertures (7), avec conservation de la solidité mécanique de la matrice spatiale (8), les substances de départ de la mousse de matériau synthétique étant un polymère étranger et un polymère de base, un agent de nucléation et un agent moussant et le polymère de base étant choisi dans le groupe constitué par les homopolymères et les copolymères d'oléfines polycycliques.

2. Structure façonnée selon la revendication 1, **caractérisée en ce qu'**au moins une zone partielle d'une des surfaces lisses fermées de la structure façonnée (1) est ouverte.

3. Structure façonnée selon la revendication 1, **caractérisée en ce que** la mousse de matériau synthétique contient des homopolymères de cyclooléfine thermoplastiques et/ou des copolymères de cyclooléfine, des mélanges de copolymères de cyclooléfine ou des mélanges de copolymères de cyclooléfine thermoplastiques et de polymères non thermoplastiques.

4. Structure façonnée selon la revendication 1, **caractérisée en ce que** les agents de nucléation sont le talc, la craie, le carbonate de sodium, le bicarbonate de sodium et/ou l'acide citrique, représentant jusqu'à 3% en poids, et l'agent moussant est le butane, le propane, le CO₂ ou les mélanges de ceux-ci, représentant jusqu'à 5% en poids.

5. Structure façonnée selon la revendication 1, **caractérisée en ce que** la proportion en poids du polymère étranger est inférieure à la proportion en poids du polymère de base.

6. Structure façonnée selon la revendication 5, **caractérisée en ce que** la proportion en poids du polymère étranger est de 0,15 à 15% en poids.

7. Structure façonnée selon les revendications 4 et 6, **caractérisée en ce que** la mousse de matériau synthétique contient comme substances de départ un granulat de copolymère de cyclooléfine, représentant environ 87% en poids, un mélange de bicarbonate de sodium et d'acide citrique, représentant environ 0,5% en poids, du butane, représentant jusqu'à 2,7% en poids, et du poly(téréphtalate d'éthylène) cristallin, représentant jusqu'à 10% en poids.

8. Structure façonnée selon la revendication 5, **caractérisée en ce que** le polymère de base est un copolymère de cyclooléfine et le polymère étranger est choisi dans le groupe constitué par le poly(téréphtalate d'éthylène), le poly(méthacrylate de méthyle), le polytétrafluoroéthylène, le polyuréthanne.

9. Structure façonnée selon la revendication 1, **caractérisée en ce que** la mousse de matériau synthétique contient comme substances de départ, en plus du granulat de copolymère de cyclooléfine, 0,15% en poids d'un mélange de bicarbonate de sodium et d'acide citrique, 2,6% en poids d'agent moussant du groupe constitué par le butane, le propane, les hydrogénofluoroalcanes et 0,10% en poids d'une huile minérale.

10. Structure façonnée selon la revendication 1, **caractérisée en ce que** la densité de la mousse de matériau synthétique est située dans la plage de 0,070 à 0,230 g/cm³.

11. Structure façonnée selon les revendications 9 et 10, **caractérisée en ce que** l'aptitude d'absorption de la mousse de matériau synthétique de liquides polaires et apolaires est de 4 à 7 grammes par gramme de mousse de matériau synthétique.

12. Structure façonnée selon la revendication 1, **caractérisée en ce que** les cellules présentent une dimension maximale ≤ 1,0 mm.

13. Procédé pour la fabrication d'une structure façonnée en mousse de matériau synthétique thermoplastique, qui contient au moins 10% en volume de cellules ouvertes, **caractérisé en ce qu'**on fond, dans une première étape de procédé, un mélange de polymères constitué d'un polymère étranger et d'au moins un copolymère de cyclooléfine et d'agent de nucléation à une température jusqu'à 320°C, on injecte dans la masse fondue de polymère, à la fin de la première étape d'extrusion, un agent moussant sous une pression élevée jusqu'à 350 bars et celui-ci est mélangé de manière homogène avec ladite masse fondue, on refroidit, dans une deuxième étape d'extrusion, juste avant l'extrusion, la masse fondue de polymère à une température de la masse située dans la plage de la limite inférieure de la plage de température visqueuse pseudoplastique de 120°C à 260°C, la température de la masse étant abaissée, par l'addition de polymère étranger, à la température qui est nécessaire lors de l'extrusion de mousses de matériau synthétique à cellules fermées en copolymères de cyclooléfine.

14. Procédé selon la revendication 13, **caractérisé en ce qu'**au moins une des surfaces de la structure façonnée extrudée est partiellement ouverte par un usinage mécanique ou par refroidissement et allongement simultané à la sortie de la filière d'extrusion.

15. Procédé selon la revendication 13, **caractérisé en ce qu'**on utilise comme agents moussants des hydrocarbures saturés, insaturés ou cycliques, des hydrocarbures halogénés, des alcools, de l'eau, de l'azote, du dioxyde de carbone ou des mélanges de ceux-ci.

16. Procédé selon la revendication 15, **caractérisé en ce que** l'agent moussant est choisi dans le groupe constitué par le méthane, l'éthane, l'éthylène, le propane, le propène, le n-butane, le 1-butène, le 2-butène, l'isobutane, l'isobutène, le n-pentane, l'isopentane, le 2,2-diméthylpropane, le cyclopentane.

17. Procédé selon la revendication 16, **caractérisé en ce que** l'agent moussant est un mélange de propane et de n-butane dans un rapport pondéral de 30 à 80% en poids de propane à 20 à 70% en poids de n-butane.

18. Procédé selon la revendication 16, **caractérisé en ce que** l'agent moussant n-butane représente une proportion de 2,10 à 4% en poids des substances de départ de la masse fondue de polymère.

19. Procédé selon la revendication 13, **caractérisé en ce qu'**on ajoute un polymère étranger, du groupe constitué par le poly(téréphtalate d'éthylène), le poly(méthacrylate de méthyle), le polyuréthanne, le polytétrafluoroéthylène, au copolymère de cyclooléfine comme polymère de base de la masse fondue de polymère et les parois cellulaires sont ouvertes sans dégradations mécaniques des âmes des parois cellulaires grâce au polymère étranger dans la masse fondue de polymère.

20. Procédé selon la revendication 19, **caractérisé en ce que** le polymère étranger est ajouté sous forme de granulat, de lot-maître ou de poudre et sa proportion en poids par rapport à la masse fondue de polymère est de 0,15 à 15% en poids.

21. Procédé selon la revendication 13, **caractérisé en ce qu'**on ajoute comme agent de nucléation du dioxyde de carbone, de l'eau, de l'azote, du talc, de la craie, du carbonate de sodium ou du bicarbonate de sodium et/ou de l'acide citrique en une proportion pondérale de 0,10 à 5% en poids par rapport à la masse fondue de polymère.

22. Procédé selon la revendication 13, **caractérisé en ce qu'**on ajoute à la masse fondue de polymères des agents mouillants constitués de composés à activité cationique, anionique, amphotères ou non ionogènes pour diminuer l'angle limite de phase d'un liquide polaire par rapport aux parois cellulaires de la structure façonnée.

23. Procédé selon la revendication 22, **caractérisé en ce que** le dosage d'alkylsulfonates en tant qu'agents mouillants est réalisé sous forme de lot-maître et la proportion pondérale du ou des alkylsulfonates par rapport à la masse fondue de polymère est de 0,1 à 10% en poids.

24. Procédé selon la revendication 15, **caractérisé en ce que** pour augmenter la vitesse d'absorption de liquides polaires, une des surfaces de la structure façonnée est soumise à un procédé corona, corona-aérosol ou de revêtement moléculaire (MCS).

25. Utilisation de la structure façonnée selon l'une ou plusieurs des revendications 1 à 12 comme matériau d'emballage pour des produits pharmaceutiques, alimentaires ou fortement hygroscopiques.

26. Utilisation de la structure façonnée selon l'une ou plusieurs des revendications 1 à 12 comme filtre d'aspiration pour des liquides polaires et/ou apolaires.

27. Utilisation de la structure façonnée selon l'une ou plusieurs des revendications 1 à 12 comme isolant électrique exempt d'agent mouillant.

28. Utilisation de la structure façonnée selon l'une ou plusieurs des revendications 1 à 12 comme matériau d'isolation thermique difficilement inflammable jusqu'à 170°C.
